# EUROPÄISCHE PATENTSCHRIFT

(11) **EP 2 195 394 B1**
(45) Veröffentlichungstag und Bekanntmachung des Hinweises auf die Patenterteilung: **16.01.2013**
(21) Anmeldenummer: 08804204.9
(22) Anmeldetag: 15.09.2008
(51) Int. Cl.: C09D 7/12, H01B 3/30

(54) **DRAHTLACKE MIT GUTER HAFTUNG AUF ELEKTRISCHEN LEITERN**
WIRE ENAMEL ADHERING WELL TO ELECTRICAL CONDUCTORS
VERNIS D'ENROBAGE DE FILS PRÉSENTANT UNE BONNE ADHÉRENCE SUR LES CONDUCTEURS ÉLECTRIQUES

(30) Priorität: 04.10.2007 DE 102007047492
(43) Veröffentlichungstag der Anmeldung: 16.06.2010
(73) Patentinhaber: Elantas GMBH, 46483 Wesel (DE)
(72) Erfinder: LIENERT, Klaus-Wilhelm, 22763 Hamburg (DE); TÖDTER-KÖNIG, Sascha, 22763 Hamburg (DE); ROST, Simon, 21514 Büchen (DE); HARTKOPP, Stefan, 22767 Hamburg (DE)
(74) Vertreter: Fitzner, Uwe
(86) Internationale Anmeldenummer: PCT/EP2008/062244
(87) Internationale Veröffentlichungsnummer: WO 2009/043710

(56) Entgegenhaltungen:
- DE-A1- 4 140 472
- DE-B3-102005 007 615
- DE-C1- 4 243 136

## Beschreibung

Die vorliegende Anmeldung nimmt die Priorität der DE 10 2007 047 492.1-43 in Anspruch.

Die vorliegende Erfindung betrifft Drahtlacke, welche sich durch eine gute und alterungsbeständige Haftung auf elektrischen Leitern auszeichnen.
Weiterhin betrifft die vorliegende Erfindung ein Verfahren zur Beschichtung von Leitern mittels der erfindungsgemäßen Backlacke.
Ferner betrifft die vorliegende Erfindung die Verwendung der erfindungsgemäßen Backlacke zur Beschichtung von elektrischen Leitern.

### Stand der Technik:

Polyurethane als Elektroisolierbeschichtungsmittel auf der Basis von hydroxylgruppenhaltigen Polyestern und blockierten Isocyanaten und Isocyanataddukten sind in großer Zahl bekannt und beispielsweise beschrieben in DE 1 957 157 und DE 100 51 392 A1. Auch die für Drahtlacke auf Polyurethan-Basis eingesetzten Kombinationen aus einem oder mehreren hydroxylgruppenhaltigen Polyestern mit im allgemeinen einer OH-Zahl von 200 bis 900 mg KOH/g, bevorzugt 250 bis 750 mg KOH/g und einem oder mehreren blockierten Isocyanataddukten sind bereits bekannt und z.B. in DE 28 40 352 A1 oder DE 25 45 912 A1 beschrieben.

Drahtbeschichtungsmittel auf der Basis von Polyesterharzen sind beispielsweise aus US 3,342,780, US 3,249,578, EP 0 144 281 A1 und WO 93/12188 A1 bekannt.

Polyesterimidlacke sind beispielsweise aus der DE 1 445 263 und DE 1 495 100 sowie WO 91/07469 A1 bekannt. Sie haben aufgrund ihrer guten mechanischen, thermischen und chemischen Eigenschaften eine breite Verwendung in der Lackdrahtindustrie gefunden.

Die heutige Herstellung von Motoren, Spulen und Transformatoren stellt hohe Anforderungen an die Verarbeitbarkeit von Lackdrähten. Die Bauteile werden immer kleiner und komplizierter. Bei der Verarbeitung werden die Lackdrähte zunehmend stärker gedehnt, gequetscht und gewunden. Auch im laufenden Betrieb sind die Lackdrähte Vibrationen und Dehnungen unterworfen. Damit der Lackdraht diese Prozedur übersteht ist eine gute Haftung der Beschichtung auf dem Kupfer auch nach Alterung unablässig. Stand der Technik ist der Einsatz von Haftvermittlern wie Dicyandiamid in Drahtlacken. Dies führt zu einer Verbesserung der Haftung bei neuen Lackdrähten, allerdings geht die Haftung nach Alterung nahezu vollständig verloren.

### Aufgabe:

Aufgabe dieser Erfindung war die Entwicklung von Drahtlacken, welche sich durch eine gute und alterungsbeständige Haftung auf elektrischen Leitern, insbesondere Kupfer, auszeichnen.

### Lösung:

Diese Aufgabe wird durch Drahtlacke enthaltend
A) 20 - 60 Gew.-% mindestens ein Bindemittel
B) 40 - 80 Gew.-% mindestens ein Lösungsmittel
C) 0 - 5 Gew.-%, bevorzugt 0,01 - 5 Gew.-%, Hilfs- und Zusatzstoffe
D) 0,01 - 5 Gew.-% Haftvermittler ausgewählt aus der Gruppe bestehend aus Imidiazol, Pyrrolidon, Amidocarbonsäuren, deren Derivaten und Gemischen davon,
gelöst.

### Begriflsdefinitionen:

Im Rahmen der vorliegenden Erfindung werden die Begriffe Lackdraht und Drahtlack, auch in ihren jeweiligen Flexionsformen, synonym verwendet.

Im Rahmen der vorliegenden Erfindung sind alle Mengenangaben, sofern nicht anders angegeben, als Gewichtsangaben zu verstehen.

Sofern nichts anderes angegeben wird, werden die angeführten Reaktionen bzw. Verfahrensschritte bei Normaldruck (Atmosphärendruck) durchgeführt.

### Detaillierte Beschreibung:

Die Drahtlacke der vorliegende Erfindung enthalten:
A) 20 - 60 Gew.-%, bezogen auf den gesamten Drahtlack, mindestens ein Bindemittel
B) 40 - 80 Gew.-%, bezogen auf den gesamten Drahtlack, mindestens ein organisches Lösungsmittel
C) 0 - 5 Gew.-%, bevorzugt 0,01 bis 5 Gew.-%, bezogen auf den gesamten Drahtlack, Hilfs- und Zusatzstoffe
D) 0,01 - 5 Gew.-%, bezogen auf den gesamten Drahtlack, Haftvermittler ausgewählt aus der Gruppe bestehend aus Imidiazol, Pyrrolidon, Amidocarbonsäuren, deren Derivaten und Gemischen davon.

Der erfindungsgemäße Drahtlack kann dabei als 1K-System oder als 2K-System vorliegen.

Die Haftvermittler D) können im Falle des 1 K-Systems
i) als eigenständige Verbindungen oder
ii) mit dem Bindemittel kondensiert vorliegen.

Erfindungsgemäß bevorzugt ist es, dass die Haftvermittler als eigenständige Verbindungen vorliegen, also nicht mit dem Bindemittel kondensiert sind.

Im Falle des 2K-Systems liegen die Haftvermittler D) in der zweiten Komponente vor und die zweite Komponente kann
i) der ersten Komponente vor der Applikation zugegeben werden oder
ii) zuerst, also vor der ersten Komponente, in der Form eines Primers auf den elektrischen Leiter lackiert werden.

In einer möglichen Ausführungsform bestehen die Drahtlacke aus den Bestandteilen A), B) und D).

Bei dem Bindemittel A) handelt es sich um Polyurethan-, Polyester- oder Polyesterimid-Drahtlackbindemittel, wie sie dem Stand der Technik entsprechen. Beispiele für einsetzbare Polyurethane-Drahtlackbindemittel sind beispielsweise die in in DE 1 957 157, DE 100 51 392 A1, DE 28 40 352 A1 oder DE 25 45 912 A1 beschriebenen.
Beispiele für einsetzbare Polyester-Drahtlackbindemittel sind beispielsweise in US 3,342,780, US 3,249,578, EP 0 144 281 A1 und WO 93/12188 A1 beschrieben. Beispiele für einsetzbare Polyesterimid-Drahtlackbindemittel sind beispielsweise in DE 1 445 263, DE 1 495 100 und WO 91/07469 A1 beschrieben.

Üblicherweise werden im Rahmen der vorliegenden Erfindung als Bestandteil B) organische Lösungsmittel verwendet.
Als organische Lösungsmittel B) kommen die üblichen Drahtlacklösungsmittel in Betracht. Dies können sein Phenole, Kresole, Xylenole sowie deren technische Isomerengemische, Glykolether, Dimethylglykol, Ethylglykol, Isopropylglykol, Butylglykol, Methyldiglykol, Ethyldiglykol, Butyldiglykol, Phenylglykol, Glykoletherester, wie beispielsweise Methylglykolacetat, Ethylglykolacetat, Butylglykolaceat und Methoxypropylacetat, cyclische Carbonate, z.B. Polypropylencarbonat, cyclische Ester, Gamma-Butyrolacton sowie Dimethylformamid, N,N-Dimethylacetamid und N-Methylpyrrolidon. Weiterhin können auch aromatische und aliphatische Alkohole und Ester und Phthalate wie Dimethylphthalat und Bezoesäuremethylester, Benzylalkohol, n-Butanol, iso-Butanol, ggf. in Kombination mit den genannten Lösemitteln eingesetzt werden. Außerdem Ketone wie Cyclohexanon und Isophoron.

Die organischen Lösemittel B) können teilweise durch Verschnittmittel ersetzt werden. Vorzugsweise werden entweder reines Lösemittel bzw. reines Lösemittelgemisch oder Lösemittel mit bis zu 40 Gew.-%, bezogen auf deren Gesamtgewicht, Verschnittmittel verwendet. Beispiele für geeignete Verschnittmittel sind Xylol, Solventnaphtha, Toluol, Ethylbenzol, Cumol, Schwerbenzol, verschiedene Solvesso® und Shellsol®-Typen sowie Deasol®.

Als Hilfs- und Zusatzstoffe C) (im folgenden auch als "Additive" bezeichnet) können alle dem Fachmann bekannten und in der Drahtlacktechnologie üblichen Komponenten verwendet werden.
Beispiele sind verlaufsverbessernde Phenol- oder Melaminharze oder andere übliche Verlaufsmittel, z.B. auf Basis von Polyacrylaten und Polysiloxanen sowie Katalysatoren. Weitere Beispiele sind Katalysatoren wie Organometallverbindungen z.B. der Meta!!e Magnesium, Aluminium, Zinn, Blei, Zink, Eisen, Titan, Bismuth, Antimon und Zirkon sowie tertiäre Amine.

Der Gehalt der erfindungsgemäßen Drahtlacke an den Hilfs- und Zusatzstoffen kann in dem angegebenem Rahmen variieren und richtet sich in erster Linie nach deren Funktion. Der Fachmann kann daher die jeweils geeignete Menge an Additiv aufgrund seines Fachwissens gegebenenfalls unter Zuhilfenahme einfacher orientierender Versuche leicht ermitteln.
Abgesehen von den genannten Hilfs- und Zusatzstoffen sind dem Fachmann weitere solche Stoffe ohne weiteres bekannt und deren Einbezug in Bestandteil C) im Rahmen der vorliegenden Erfindung umfaßt.

Als Haftvermittler D) werden solche ausgewählt aus der Gruppe bestehend aus Imidiazol, Pyrrolidon, Amidocarbonsäuren, deren Derivaten und Gemischen davon eingesetzt.

Überraschenderweise konnten im Rahmen der vorliegenden Erfindung durch den Einsatz von Imidazol-, Pyrrolidon- und Amidocarbonsäurederivaten als Haftvermittler D) besonders gute Effekte erzielt werden.

Als Imidazol- und Pyrrolidonderivate kommen insbesondere in Betracht:
Vinylimidazol, Vinylpyrrollidon, Homo- und Copolymere dieser Vinylverbindungen in allen Verhältnissen, wobei die Copolymere Blockcopolymere sein können oder ataktische, syndiotaktische oder isotaktische Copolymere.
Insbesondere bevorzugt werden erfindungsgemäß Vinylimidazol und/oder Vinylimidazol-Vinylpyrrollidon-Copolymer (50:50).

Die erfindungsgemäß einsetzbaren Amidocarbonsäurederivate werden hergestellt aus Polycarbonsäuren und Aminen und deren Derivate. Als Carbonsäuren und deren Derivate können aliphatische, cycloaliphatische und aromatische Polycarbonsäuren und deren Derivate wie Phthalsäure, Phthalsäureanhydrid, Pyromellithsäuredianhydrid und Trimellithsäureanhydrid, Naphthalintetracarbonsäuredianhydride oder Dianhydride von Tetracarbonsäuren mit zwei Benzolkernen im Molekül, bei denen die Carboxylgruppen in 3,3'4- und 4'-Stellung stehen und deren freie Säuren verwendet werden. Bei Polycarbonsäuren mit einer Funktionalität größer 2 können die übrigen Säurefunktionen mit Alkoholen verestert oder mit anderen Reagenzien umgesetzt sein.

Als Amine kommen aliphatische, cycloaliphatische und aromatische primäre und sekundäre Amine in Betracht, vorzugsweise sekundäre Amine wie z.B. Diethanolamin, Pyrrole, Pyrrolidine, Piperidine, Triazole, Tetrazole, Indole, Morpholine, Aziridine, Azetine, Imidiazole, Pyrazole, Pyridone, Piperazine.

Bei Verwendung von Polycarbonsäuren mit einer Funktionalität größer 2 wird zunächst die Umsetzung dieser Säuregruppen durchgeführt. Im Falle einer Veresterung werden die Polycarbonsäure und der verwendete Alkohol, wie z.B. Monophenylglykol bei einer Temperatur von 150-250°C, je nach eingesetzten Komponenten, im Vakuum kondensiert bis die theoretische Destillatmenge erreicht wurde. Im zweiten Schritt findet die Additionsreaktion mit dem Amin statt, welches auf Grund der stark exothermen Reaktion langsam zugegeben wird. Nach beendeter Reaktion zum Amidocarbonsäurederivat kann das Produkt mit den üblichen Drahtlacklösungsmitteln gelöst und verdünnt werden.
Besonders bevorzugt ist eine Amidocarbonsäure der folgenden Formel

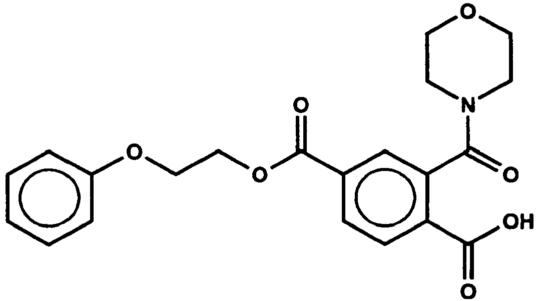

Der Haftvermittler kann mit dem Bindemittel des Drahtlackes reagieren lassen oder als Additiv zum Lack in einer Konzentration von 0,01 % - 5%, bevorzugt 0,1 % - 3% bezogen auf den Festkörper- bzw. Bindemittelanteil im Drahtlack zugegeben werden. In einer weiteren Ausführungsform kann die Imidazol-/Pyrrolidonverbindung beziehungsweise das Amidocarbonsäurederivat in den üblichen Drahtlacklösungsmitteln gelöst in einer Konzentration von 5% - 80%, bevorzugt 20% - 60% als Primer auf den Draht aufbracht werden. Anschließend wird hierauf der Drahtlack lackiert.

Aspekt der vorliegenden Erfindung ist dabei auch die Verwendung der als Bestandteil D) genannten Verbindungen als Haftvermittler, insbesondere von Imidazol-, Pyrrolidon- und Amidocarbonsäurederivaten, höchst bevorzugt von Vinylimidazol und/oder Vinylimidazol-Vinylpyrrollidon-Copolymer (50:50), für Drahtiacke in Form von
i) Additiven,
ii) mit dem Bindemittel kondensiert oder
iii) als vor dem Drahtlack aufzutragende Primer.

Die verschiedenen Ausgestaltungen der vorliegenden Erfindung, z.B. diejenigen der verschiedenen abhängigen Ansprüche, können dabei in beliebiger Art und Weise miteinander kombiniert werden.

Die Erfindung wird nun unter Bezugnahme auf die folgenden nicht-limitierenden Beispiele erläutert.

### Beispiele:

Die erfindungsgemäßen Haftvermittler wurden in den folgenden Drahtlacken der Firma ELANTAS GmbH getestet: WE 1332/31 (Polyurethandrahtlack mit einem Festkörperanteil von 31%, einer Viskosität von 60-100 mPas bei 23°C und einer Wärmeklasse von TI = 155), WE 1598/35 (Polyesterimiddrahtlack mit einem Festkörperanteil von 35%, einer Viskosität von 140-220 mPas bei 23°C und einer Wärmeklasse von TI = 180)

### Lackierbedingungen :

- Temperatur:: 500-550°C
- Auftragssystem :: Düsen
- Drahtdurchmesser :: 0,8 mm
- Zahl der Durchzüge :: 11
- Zunahmegrad :: 50-60 µm

Die lackierten Drähte wurden nach IEC 851 geprüft. Die Haftungseigenschaften wurden mit Hilfe des Peel-Testes und Messung der Flexibilität (Dehnung, Wickellocke) bestimmt. Der Peel-Test und die Bestimmung der Flexibilität wurden jeweils direkt nach der Lackierung und nach Alterung, d.h. Lagerung des Lackdrahtes bei der jeweiligen Wärmeklasse des Lackdrahtes für eine Stunde, durchgeführt.

### Beispiel 1: Herstellung einer Amidocarbonsäure

In einer Standard 2,5 Liter Reaktionsapparatur Planschliffkolben mit einem Kondensatabscheider wurden unter Rühren und Einleitung von Stickstoff folgende monomere Polyesterbausteine eingewogen: 280 g Monophenylglykol und 384 g Trimellithsäureanhydrid. Die Reaktionskomponenten wurden langsam auf eine Temperatur von 220°C erhitzt und 1 h bei 200°C - 230°C gehalten. Dann wurde langsam auf 220°C - 250°C erhitzt und Vakuum angelegt. Es wurde so lange kondensiert bis min. 90% der theoretischen Destillatmenge erhalten wurden. Der Ansatz wurde im Vakuum auf 80 bis 95°C gekühlt wobei das Vakuum mit Stickstoff aufgelöst wurde. Dann wurde aus einem Tropftrichter 180 g Morpholin in den Ansatz dosiert, wobei die Exothermie die Zugabegeschwindigkeit bestimmte. Nach Beendigung der Zugabe wurde bei einer Temperatur von 100°C - 140°C 0,5 h nachgerührt. Der Ansatz wurde mit 540 g Kresol und 270 g Solventnaphtha angelöst und 4 h intensiv gerührt. Das Produkt hatte eine Viskosität von 1400 mPas (23°C) und einen Festkörper von 56,8% (1g/1h/180°C).

### Beispiel 2: Herstellung eines erfindungsgemäßen Drahtlackes 1

Zu 2500 g des Polyurethandrahtlackes WE 1332/31 mit einem Festkörperanteil von 31% wurden 14 g der Amidocarbonsäure aus Beispiel 1 zugegeben (entspricht 1 % bzgl. FK) und dann eine Stunde gerührt. Anschließend wurde der Drahtlack im direkten Vergleich mit dem Polyurethandrahtlack WE 1332/31 ohne Amidocarbonsäure lackiert und geprüft. Mit dem Polyurethandrahtlack WE 1332/31 ohne Amidocarbonsäure wurden mit dem Peel-Test 115 Umdrehungen und eine Flexibilität von 10% vor Alterung und 115 Umdrehungen und eine Flexibilität von 0% nach Alterung erreicht. Der Zusatz von 1% Amidocarbonsäure führte im Polyurethandrahtlack WE 1332/31 mit dem Peel-Test zu 165 Umdrehungen und einer Flexibilität von 15% vor Alterung und 180 Umdrehungen und einer Flexibilität von 15% nach Alterung. Die thermischen, elektrischen und die anderen mechanischen Eigenschaften änderten sich nicht.

### Beispiel 3: Herstellung eines erfindungsgemäßen Drahtlackes 2

Zu 2500 g des Polyurethandrahtlackes WE 1332/31 mit einem Festkörperanteil von 31 % wurden 15 g einer 25% Vinylimidazol-Vinylpyrrolidon-Copolymerlösung (50/50) in Kresol zugegeben (entspricht 0,5% bzgl. FK) und dann eine Stunde gerührt. Anschließend wurde der Drahtlack im direkten Vergleich mit dem Polyurethandrahtlack WE 1332/31 ohne Vinylimidazol-Vinylpyrrolidon-Copolymer (50/50) lackiert und geprüft. Mit dem Polyurethandrahtlack WE 1332/31 ohne Vinylimidazol-Vinylpyrrolidon-Copolymer (50/50) wurden mit dem Peel-Test 115 Umdrehungen und eine Flexibilität von 10% vor Alterung und 115 Umdrehungen und eine Flexibilität von 0% nach Alterung erreicht. Der Zusatz von 0,5% Vinylimidazol-Vinylpyrrolidon-Copolymer (50/50) führt im Polyurethandrahtlack WE 1332/31 mit dem Peel-Test zu 200 Umdrehungen und eine Flexibilität von 15% vor Alterung und 250 Umdrehungen und eine Flexibilität von 10% nach Alterung. Die thermischen, elektrischen und die anderen mechanischen Eigenschaften änderten sich nicht.

### Beispiel 4: Herstellung eines erfindungsgemäßen Drahtlackes 3

Zu 2500 g des Polyurethandrahtlackes WE 1332/31 mit einem Festkörperanteil von 31 % wurden 6 g einer 25% Vinylimidazollösung in Kresol zugegeben (entspricht 0,2% bzgl. FK) und dann eine Stunde gerührt. Anschließend wurde der Drahtlack im direkten Vergleich mit dem Polyurethan-Drahtlack WE 1332/31 ohne Vinylimidazol lackiert und geprüft. Mit dem Polyurethandrahtlack WE 1332/31 ohne Vinylimidazol wurden mit dem Peel-Test 115 Umdrehungen und eine Flexibilität von 10% vor Alterung und 115 Umdrehungen und eine Flexibilität von 0% nach Alterung erreicht. Der Zusatz von 0,2% Vinylimidazol führt im Polyurethan-Drahtlack WE 1332/31 mit dem Peel-Test zu 240 Umdrehungen und eine Flexibilität von 20% vor Alterung und 270 Umdrehungen und eine Flexibilität von 10% nach Alterung. Die thermischen, elektrischen und die anderen mechanischen Eigenschaften änderten sich nicht.

### Beispiel 5: Herstellung eines erfindungsgemäßen Drahtlackes 4

Zu 2500 g des Polyesterimiddrahtlackes WE 1598/35 mit einem Festkörperanteil von 35% wurden 15 g der Amidocarbonsäure aus Beispiel 1 zugegeben (entspricht 1 % bzgl. FK) und dann eine Stunde gerührt. Anschließend wurde der Drahtlack im direkten Vergleich mit dem Polyesterimiddrahtlack WE 1598/35 ohne Amidocarbonsäure lackiert und geprüft. Mit dem Polyesterimiddrahtlack WE 1598/35 ohne Amidocarbonsäure wurden mit dem Peel-Test 165 Umdrehungen und eine Flexibilität von 30% vor Alterung und 170 Umdrehungen und eine Flexibilität von 10% nach Alterung erreicht. Der Zusatz von 1% Amidocarbonsäure führte im Polyesterimiddrahtlack WE 1598/35 mit dem Peel-Test zu 190 Umdrehungen und einer Flexibilität von 30% vor Alterung und 230 Umdrehungen und einer Flexibilität von 20% nach Alterung. Die thermischen, elektrischen und die anderen mechanischen Eigenschaften änderten sich nicht.

### Beispiel 6: Herstellung eines erfindungsgemäßen Drahtlackes 5

Zu 2500 g des Polyesterimiddrahtlackes WE 1598/35 mit einem Festkörperanteil von 35% wurden 35 g einer 25% Vinylimidazol-Vinylpyrrolidon-Copolymerlösung (50/50) in Kresol zugegeben (entspricht 1% bzgl. FK) und dann eine Stunde gerührt. Anschließend wurde der Drahtlack im direkten Vergleich mit dem Polyesterimiddrahtlack WE 1598/35 ohne Vinylimidazol-Vinylpyrrolidon-Copolymer (50/50) lackiert und geprüft. Mit dem Polyesterimiddrahtlack WE 1598/35 ohne Vinylimidazol-Vinylpyrrolidon-Copolymer (50/50) wurde mit dem Peel-Test 165 Umdrehungen und eine Flexibilität von 30% vor Alterung und 170 Umdrehungen und eine Flexibilität von 10% nach Alterung erreicht. Der Zusatz von 1 % Vinylimidazol-Vinylpyrrolidon-Copolymer (50/50) führte im Polyesterimiddrahtlack WE 1598/35 mit dem Peel-Test zu 185 Umdrehungen und einer Flexibilität von 30% vor Alterung und 240 Umdrehungen und einer Flexibilität von 25% nach Alterung. Die thermischen, elektrischen und die anderen mechanischen Eigenschaften änderten sich nicht.

### Beispiel 7: Herstellung eines erfindungsgemäßen Drahtlackes 6

Zu 2500 g des Polyesterimiddrahtlackes WE 1598/35 mit einem Festkörperanteil von 35% wurden 19 g einer 25% Vinylimidazollösung in Kresol zugegeben (entspricht 0,5% bzgl. FK) und dann eine Stunde gerührt. Anschließend wurde der Drahtlack im direkten Vergleich mit dem Polyesterimiddrahtlack WE 1598/35 ohne Vinylimidazol lackiert und geprüft. Mit dem Polyesterimiddrahtlack WE 1598/35 ohne Vinylimidazol wurde mit dem Peel-Test 165 Umdrehungen und eine Flexibilität von 30% vor Alterung und 170 Umdrehungen und eine Flexibilität von 10% nach Alterung erreicht. Der Zusatz von 0,5% Vinylimidazol führte im Polyesterimiddrahtlack WE 1598/35 mit dem Peel-Test zu 180 Umdrehungen und einer Flexibilität von 30% vor Alterung und 235 Umdrehungen und einer Flexibilität von 15% nach Alterung. Die thermischen, elektrischen und die anderen mechanischen Eigenschaften änderten sich nicht.

### Beispiel 8: Herstellung eines erfindungsgemäßen Drahtlackes 7

Zu 2500 g des Polyesterdrahtlackes Terebec SL225® mit einem Festkörperanteil von 40% wurden 17 g der Amidocarbonsäure aus Beispiel 1 zugegeben (entspricht 1 % bzgl. FK) und dann eine Stunde gerührt. Anschließend wurde der Drahtlack (6 Durchzüge) mit einem Polyamidimid Overcoatdrahtlack Allotherm 602L® mit einem Festkörperanteil von 35% (4 Durchzüge) im direkten Vergleich mit dem Polyester-Drahtlack Terebec SL225® und Polyamidimid Overcoatdrahtlack Allotherm 602L® Amidocarbonsäure lackiert und geprüft. Mit dem Drahtlacksystem ohne Amidocarbonsäure wurden mit dem Peel-Test 170 Umdrehungen und eine Flexibilität von 25% vor Alterung und 170 Umdrehungen und eine Flexibilität von 25% nach Alterung erreicht. Der Zusatz von 1 % Amidocarbonsäure führte im Polyester-Polyamidimid-Drahtlacksystem mit dem Peel-Test zu 190 Umdrehungen und einer Flexibilität von 25% vor Alterung und 210 Umdrehungen und einer Flexibilität von 25% nach Alterung. Die thermischen, elektrischen und die anderen mechanischen Eigenschaften änderten sich nicht.

### Beispiel 9: Herstellung eines Vergleichsbeispiels

Zu 2500 g des Polyesterimiddrahtlackes WE 1598/35 mit einem Festkörperanteil von 35% wurden 9 g Dicyandiamid zugegeben (entspricht 1 % bzgl. FK) und dann eine Stunde gerührt. Anschließend wurde der Drahtlack im direkten Vergleich mit dem Polyesterimiddrahtlack WE 1598/35 ohne Dicyandiamid lackiert und geprüft. Mit dem Polyesterimiddrahtlack WE 1598/35 ohne Dicyandiamid wurde mit dem Peel-Test 165 Umdrehungen und eine Flexibilität von 30% vor Alterung und 170 Umdrehungen und eine Flexibilität von 10% nach Alterung erreicht. Der Zusatz von 1 % Dicyandiamid führte im Polyesterimiddrahtlack WE 1598/35 mit dem Peel-Test zu 230 Umdrehungen und einer Flexibilität von 30% vor Alterung und 0 Umdrehungen und einer Flexibilität von 0% nach Alterung. Die Haftung ging vollständig verloren.

## Patentansprüche

1. Drahtlack enthaltend
A) 20 - 60 Gew.-%, bezogen auf den gesamten Drahtlack, mindestens ein Bindemittel
B) 40 - 80 Gew.-%, bezogen auf den gesamten Drahtlack, mindestens ein organisches Lösungsmittel
C) 0 - 5 Gew.-%, bezogen auf den gesamten Drahtlack, Hilfs- und Zusatzstoffe
D) 0,01 - 5 Gew.-%, bezogen auf den gesamten Drahtlack, Haftvermittler ausgewählt aus der Gruppe bestehend aus Imidiazol, Pyrrolidon, Amidocarbonsäuren, deren Derivaten und Gemischen davon,
wobei die Summe der Bestandteile 100 Gew.-% ergibt.

2. Drahtlack nach Anspruch 1, **dadurch gekennzeichnet, daß** C) 0,01 - 5 Gew.-%, bezogen auf den gesamten Drahtlack, Hilfs- und Zusatzstoffe enthalten sind.

3. Drahtlack nach Anspruch 1 oder 2, **dadurch gekennzeichnet, daß** er als 1 K-System vorliegt.

4. Drahtlack nach Anspruch 1 oder 2, **dadurch gekennzeichnet, daß** er als 2K-System vorliegt.

5. Drahtlack nach einem der Ansprüche 1 bis 4, **dadurch gekennzeichnet, daß** das Bindemittel A) aus der Gruppe bestehend aus Polyurethan-, Polyester-, Polyesterimid-Drahtlacken und Gemischen davon ausgewählt wird.

6. Drahtlack nach einem der Ansprüche 1 bis 5, **dadurch gekennzeichnet, daß** das organische Lösungsmittel B) aus der Gruppe bestehend aus Kresol, Solventnaphtha und Gemischen davon ausgewählt wird.

7. Drahtlack nach einem der Ansprüche 1 bis 6, **dadurch gekennzeichnet, daß** die Hilfs- und Zusatzstoffe C) aus der Gruppe bestehend aus Phenolharze, Melaminharzen, Verlaufsmitteln, Katalysatoren, Aminen und Gemischen davon ausgewählt werden.

8. Drahtlack nach einem der Ansprüche 1 bis 7, **dadurch gekennzeichnet, daß** als Haftvermittler Vinylimidiazol und/oder Vinylimidiazol-Vinylpyrrollidon-Copolymer (50:50) eingesetzt werden.

9. Verfahren zum Beschichten von elektrischen Leitern, **dadurch gekennzeichnet, daß**
a) ein elektrischer Leiter bereitgestellt wird,
b) auf den elektrischen Leiter ein Drahtlack gemäß einem der Ansprüche 1 bis 8 aufgebracht wird und
c) der Drahtlack gehärtet wird.

10. Verfahren nach Anspruch 9, **dadurch gekennzeichnet, daß**
b1) die zweite Komponente enthaltend Bestandteil D) aufgebracht wird,
b2) die erste Komponente enthaltend die Bestandteile A), B) und C) entweder naß-in-naß oder nach vorhergehendem Härten oder Ablüften lassen der zweiten Komponente enthaltend Bestandteil D) auf die zweite Komponente aufgebracht wird.

11. Verfahren nach einem der Ansprüche 9 oder 10, **dadurch gekennzeichnet, daß** der elektrische Leiter aus der Gruppe bestehend aus Silber, Gold und Kupfer oder Legierungen dieser Metalle, bevorzugt aus Kupfer, besteht.

12. Verwendung der Drahtlacke gemäß einem der Ansprüche 1 bis 8 zur Beschichtung von elektrischen Leitern, insbesondere Lackdrähten.

13. Verwendung nach Anspruch 12, **dadurch gekennzeichnet, daß** der elektrische Leiter aus der Gruppe bestehend aus Silber, Gold und Kupfer oder Legierungen dieser Metalle, insbesondere Kupfer, besteht.

14. Verwendung der als Bestandteil D) genannten Verbindungen als Haftvermittler für Drahtlacke in Form von
i) Additiven,
ii) mit dem Bindemittel kondensiert oder
iii) als vor dem Drahtlack aufzutragende Primer.

15. Verwenduung nach Anspruch 14, **dadurch gekennzeichnet, dass** Imidazol-, Pyrrolidon- und Amidocarbonsäurederivate, höchst bevorzugt Vinylimidazol und/oder Vinylimidazol-Vinylpyrrollidon-Copolymer (50:50) als Bestandteil D) verwendet werden.

## Claims

1. Wire enamel comprising
A) 20%-60% by weight, based on the total wire enamel, of at least one binder
B) 40%-80% by weight, based on the total wire enamel, of at least one organic solvent
C) 0%-5% by weight, based on the total wire enamel, of auxiliaries and additives
D) 0.01%-5% by weight, based on the total wire enamel, of adhesion promoter selected from the group consisting of imidazole, pyrrolidone, amidocarboxylic acids, their derivatives and mixtures thereof,
the sum of the constituents making 100% by weight.

2. Wire enamel according to Claim 1, **characterized in that** there is
C) 0.01%-5% by weight, based on the total wire enamel, of auxiliaries and additives.

3. Wire enamel according to Claim 1 or 2, **characterized in that** it is in the form of a one-component (1K) system.

4. Wire enamel according to Claim 1 or 2, **characterized in that** it is in the form of a two-component (2K) system.

5. Wire enamel according to any one of Claims 1 to 4, **characterized in that** the binder A) is selected from the group consisting of polyurethane, polyester and polyesterimide wire enamels and mixtures thereof.

6. Wire enamel according to any one of Claims 1 to 5, **characterized in that** the organic solvent B) is selected from the group consisting of cresol, solvent naphtha and mixtures thereof.

7. Wire enamel according to any one of Claims 1 to 6, **characterized in that** the auxiliaries and additives C) are selected from the group consisting of phenolic resins, melamine resins, flow control agents, catalysts, amines and mixtures thereof.

8. Wire enamel according to any one of Claims 1 to 7, **characterized in that** adhesion promoters used are vinylimidazole and/or vinylimidazole-vinylpyrrolidone copolymer (50:50).

9. Method of coating electrical leads, **characterized in that**
a) an electrical lead is provided,
b) a wire enamel according to any one of Claims 1 to 8 is applied to the electrical lead and
c) the wire enamel is cured.

10. Method according to Claim 9, **characterized in that**
b1) the second component comprising constituent D) is applied,
b2) the first component, comprising constituents A), B) and C), is applied, either wet-on-wet or after prior curing or flashing-off of the second component, comprising constituent D), to the second component.

11. Method according to either of Claims 9 and 10, **characterized in that** the electrical lead is from the group consisting of silver, gold and copper or alloys of these metals, preferably of copper.

12. Use of the wire enamels according to any one of Claims 1 to 8 for coating electrical leads, more particularly enamelled wires.

13. Use according to Claim 12, **characterized in that** the electrical lead is from the group consisting of silver, gold and copper or alloys of these metals, more particularly copper.

14. Use of the compounds specified as constituent D) as adhesion promoters for wire enamels, in the form of
i) additives,
ii) condensed with the binder or
iii) as primers to be applied before the wire enamel.

15. Use according to Claim 14, **characterized in that** imidazole, pyrrolidone and amidocarboxylic acid derivatives, most preferably vinylimidazole and/or vinylimidazole-vinylpyrrolidone copolymer (50:50), are used as constituent D).

## Revendications

1. Vernis pour fils métalliques, contenant
A) 20 - 60 % en poids, par rapport au vernis pour fils métalliques dans son ensemble, d'au moins un liant
B) 40 - 80 % en poids, par rapport au vernis pour fils métalliques dans son ensemble, d'au moins un solvant organique
C) 0 - 5 % en poids, par rapport au vernis pour fils métalliques dans son ensemble, d'adjuvants et additifs
D) 0,01 - 5 % en poids, par rapport au vernis pour fils métalliques dans son ensemble, d'un promoteur d'adhérence choisi dans le groupe constitué par l'imidazole, la pyrrolidone, les acides amidocarboxyliques, leurs dérivés et des mélanges de ceux-ci,
la somme des composants étant égale à 100 % en poids.

2. Vernis pour fils métalliques selon la revendication 1, **caractérisé en ce que**
C) 0,01 - 5 % en poids, par rapport au vernis pour fils métalliques dans son ensemble, d'adjuvants et additifs sont contenus.

3. Vernis pour fils métalliques selon la revendication 1 ou 2, **caractérisé en ce qu'**il se trouve sous forme de système monocomposant (1K).

4. Vernis pour fils métalliques selon la revendication 1 ou 2, **caractérisé en ce qu'**il se trouve sous forme de système bicomposant (2K).

5. Vernis pour fils métalliques selon l'une quelconque des revendications 1 à 4, **caractérisé en ce que** le liant A) est choisi dans le groupe constitué par des vernis polyuréthane, polyester, polyesterimide pour fils métalliques et des mélanges de ceux-ci.

6. Vernis pour fils métalliques selon l'une quelconque des revendications 1 à 5, **caractérisé en ce que** le liant organique B) est choisi dans le groupe constitué par le crésol, le solvant naphta et des mélanges de ceux-ci.

7. Vernis pour fils métalliques selon l'une quelconque des revendications 1 à 6, **caractérisé en ce que** les adjuvants et additifs C) sont choisis dans le groupe constitué par des résines phénoliques, des résines mélamine, des agents d'étalement, des catalyseurs, des amines et des mélanges de ceux-ci.

8. Vernis pour fils métalliques selon l'une quelconque des revendications 1 à 7, **caractérisé en ce qu'**on utilise comme promoteurs d'adhérence le vinylimidazole et/ou un copolymère vinylimidazole-vinylpyrrolidone (50:50).

9. Procédé pour l'enduction de conducteurs électriques, **caractérisé en ce que**,
a) on fournit un conducteur électrique,
b) on applique sur le conducteur électrique un vernis pour fils métalliques selon l'une quelconque des revendications 1 à 8 et
c) on fait durcir le vernis pour fils métalliques.

10. Procédé selon la revendication 9, **caractérisé en ce que**
b1) on applique le deuxième composant contenant le constituant D),
b2) on applique sur le deuxième composant le premier composant contenant les constituants A), B) et C) soit en humide-sur-humide, soit après avoir laissé préalablement durcir ou évaporer le deuxième composant contenant le constituant D).

11. Procédé selon l'une quelconque des revendications 9 et 10, **caractérisé en ce que** le conducteur électrique consiste en le groupe constitué par l'argent, l'or et le cuivre ou des alliages de ces métaux, de préférence en cuivre.

12. Utilisation des vernis pour fils métalliques selon l'une quelconque des revendications 1 à 8, pour l'enduction de conducteurs électriques, en particulier de fils métalliques vernis.

13. Utilisation selon la revendication 12, **caractérisée en ce que** le conducteur électrique consiste en le groupe constitué par l'argent, l'or et le cuivre ou des alliages de ces métaux, en particulier en cuivre.

14. Utilisation des composés nommés en tant que constituant D), comme promoteur d'adhérence pour des vernis pour fils métalliques, sous forme
i) d'additifs,
ii) condensée avec le liant ou
iii) de primaires à appliquer avec le vernis pour fils métalliques.

15. Utilisation selon la revendication 14, **caractérisée en ce qu'**on utilise comme constituant D) des dérivés d'imidazole, de pyrrolidone et d'acide amidocarboxylique, de façon tout particulièrement préférée le vinylimidazole et/ou un copolymère vinylimidazole-vinylpyrrolidone (50:50).
